# EUROPEAN PATENT APPLICATION

(11) **EP 1 975 422 A1**
(43) Date of publication of application: **01.10.2008**
(21) Application number: 06812161.5
(22) Date of filing: 30.10.2006
(51) Int. Cl.: F16B 37/00

(54) **REINFORCING-BAR ENGAGEMENT DEVICE**

(30) Priority: 18.01.2006 JP 2006009843
(71) Applicant: Tama Home Co., Ltd., Tokyo 108-0074 (JP); Nakamura, Mituo, Dazaifu-shi, Fukuoka 818-0131 (JP)
(72) Inventor: NAKAMURA, Mituo, Dazaifu-shi, Fukuoka 81-80131 (JP)
(74) Representative: Samson & Partner
(86) International application number: PCT/JP2006/321651
(87) International publication number: WO 2007/083428

(57) **Abstract**

A reinforcing bar locking device that can be easily locked at a position relatively far from an end portion of a reinforcing bar and apply a strong locking force to the reinforcing bar. The reinforcing bar (10) has a body member (11) having a through hole (11a) in which the reinforcing bar is insertable and also has a pair of fitting members (12) fitted between the reinforcing bar inserted into the through hole (11a) and the inner peripheral surface of the through hole (11a). The inner peripheral surface (11b) of the through hole (11a) is of a funnel shape whose diameter is reduced in the direction of the center axis (C). A female screw thread part (12a) with which the reinforcing bar engages is formed on the inner peripheral surface of the fitting member (12). The outer peripheral surface (12b) of the fitting member (12) is a conical surface that has surface contact with the inner peripheral surface (11b) of the body member (11). On the outer periphery of the body member (11), a substantially cylindrical inserting section (11c) and a flange section (11d) having a larger diameter than the inserting section (11c) are provided. Each of the fitting members (12) has a slit (12c) opened in the direction of the center axis (C) of the through hole (11a).

## Description

### FIELD OF THE INVENTION

The present invention relates to a reinforcing bar locking device for fixing a reinforcing bar inserted into a plurality of arrayed blocks while applying a tensile force to the reinforcing bar, which can be locked with the reinforcing bar exposed from an end face of the blocks.

### BACKGROUND ART

When a structure such as a block wall is built by stacking a plurality of concrete blocks, a reinforcing bar inserted into the blocks so as to run through hollow portions or the like in the blocks is often fixed while applying a tensile force to the reinforcing bar in order to increase the bonding force between the blocks. In this case, generally, the reinforcing bar is fixed by mounting a member having a function of a washer which is larger than the internal diameter of the hollow portions or the like and a nut on the end portion of the reinforcing bar exposed from the end face of the blocks and by tightening the nut (see Patent Document 1, for example).

Patent Document 1: Japanese Patent Publication No. S34-3622

### DISCLOSURE OF THE INVENTION

### PROBLEMS TO BE SOLVED BY THE INVENTION

As shown in Patent Document 1, by screwing and tightening a nut onto an end portion of a reinforcing bar protruding from an end face of a block which is positioned uppermost on a group of stacked blocks, the group of blocks can be fixed while applying a tensile force to the reinforcing bar. However, when the end portion of the reinforcing bar exposed from the end face of the block is long, the nut screwed onto the end portion of the reinforcing bar needs to be turned many times until the nut reaches the desired position on the end face of the block. Therefore, the operation of mounting the nut on the reinforcing bar is troublesome and takes a long time.

Accordingly, where a large number of reinforcing bars are used, for example, in building a large structure, a considerable amount of trouble and time is consumed in the operation of screwing and tightening the nuts onto the end portions of the reinforcing bars.

An object of the present invention is to provide a reinforcing bar locking device which can be easily locked at a position relatively far from an end portion of a reinforcing bar and apply a relatively strong locking force to the reinforcing bar.

### MEANS FOR SOLVING THE PROBLEMS

A reinforcing bar locking device according to the present invention comprises a body member having a through hole in which a reinforcing bar is insertable; a plurality of fitting members which are fitted between the reinforcing bar inserted into the through hole and an inner peripheral surface of the through hole, the inner peripheral surface of the through hole having a funnel shape whose diameter is reduced in a direction of a center axis; an engaging section which engages with the reinforcing bar formed on an inner peripheral surface of the fitting members; and a conical surface which has surface contact with the inner peripheral surface of the body member formed on at least a part of an outer peripheral surface of the fitting members.

By the above structure, the reinforcing bar locking device can be locked at a desired position on a reinforcing bar in the following process. First, a body member is mounted so that an end portion of a reinforcing bar protruding from an end face of a block penetrates from a smaller opening to a larger opening of a through hole of the body member. After the body member is moved along the reinforcing bar up to the end face of the block, a tensile force is applied to the reinforcing bar. Next, a plurality of fitting members are fitted between the reinforcing bar and an inner peripheral surface of the through hole while an engaging section of the fitting members is engaged with the reinforcing bar. Then, the tensile force applied to the reinforcing bar is released. In this way, the reinforcing bar contracts in a direction of a center axis so that the plurality of fitting members are pulled in a direction toward the reduced diameter of the through hole while engaging with the reinforcing bar, and a conical surface on an outer peripheral surface of the fitting members is brought into surface contact with the inner peripheral surface of the through hole of the body member and locked. Thus, the reinforcing bar locking device is locked at the desired position of the reinforcing bar (on the end face of the block, for example) so as not to move.

In the above case, the body member mounted from the end portion of the reinforcing bar can be moved to the end face of the block without turning the body member. Therefore, the body member can be easily locked even at a position far from the end portion of the reinforcing bar. Furthermore, the reinforcing bar, the fitting members, and the body member can be locked in an integrated manner with the contracting force of the reinforcing bar after releasing the tensile force, which exhibits a relatively strong locking force applied to the reinforcing bar. It is also possible to interpose a washer member having a through hole for the reinforcing bar between the body member of the reinforcing bar locking device of the present invention and the end face of the block.

As the engaging section, preferably, a female screw thread part which is screwed onto a male screw part formed on an outer peripheral surface of the reinforcing bar may be provided on the inner peripheral surface of the fitting member. By this structure, the fitting member can firmly engage with the reinforcing bar, which enhances the locking force with the reinforcing bar.

Furthermore, the fitting member may be further provided with a slit which is opened in the direction of the center axis of the through hole. By this structure, after the tensile force is released, when the reinforcing bar and the fitting member move in the direction toward the reduced diameter of the through hole, the fitting member itself is deformable so as to reduce its diameter due to a surface pressure applied from the inner peripheral surface of the through hole. Therefore, a clamping force applied to the reinforcing bar by the fitting member is increased, resulting in further enhancement of the locking force to the reinforcing bar.

In the meantime, the body member may be provided with, on an outer periphery thereof, at least a pair of flat parts arranged in parallel with each other on opposite sides of the center axis of the through hole. By this structure, a tool such as a wrench can engage with the flat parts of the body member to turn the body member. Thus, the reinforcing bar locking device locked on the reinforcing bar can be tightened or loosened using a wrench or the like.

### EFFECTS OF THE INVENTION

The present invention can provide a reinforcing bar locking device which can be easily locked at a position relatively far from an end portion of a reinforcing bar and apply a strong locking force to the reinforcing bar.

### BRIEF DESCRIPTION OF THE DRAWINGS

Fig. 1 is a plan view illustrating a reinforcing bar locking device of an embodiment of the present invention;
Fig. 2 is a front view of the reinforcing bar locking device shown in Fig. 1;
Fig. 3 is a sectional view taken along the line A-A in Fig. 1;
Fig. 4 is an exploded view of the reinforcing bar locking device shown in Fig. 3;
Fig. 5 is a plan view of a body member which constitutes the reinforcing bar locking device shown in Fig. 1;
Fig. 6 is a front view of the body member shown in Fig. 5;
Fig. 7 is a plan view of a fitting member which constitutes the reinforcing bar locking device shown in Fig. 1;
Fig. 8 is a front view of the fitting member shown in Fig. 7;
Fig. 9 is a bottom view of the fitting member shown in Fig. 7;
Fig. 10 is a view illustrating the reinforcing bar locking device of Fig. 1 in use;
Fig. 11 is a view illustrating the reinforcing bar locking device of Fig. 1 in use;
Fig. 12 is a view illustrating the reinforcing bar locking device of Fig. 1 in use;
Fig. 13 is a plan view illustrating a reinforcing bar locking device of another embodiment of the present invention; and
Fig. 14 is a plan view illustrating a reinforcing bar locking device of yet another embodiment of the present invention.

### DESCRIPTION OF REFERENCE NUMERALS AND SYMBOLS

10, 20, 30: reinforcing bar locking device
11, 21, 31: body member
11 a: through hole
11b: inner peripheral surface
11c: inserting section
11d: flange section
11f: smaller opening
11g: larger opening
12: fitting member
12a: female screw thread part
12b: outer peripheral surface
12c: slit
13: reinforcing bar
13 a: male screw part
13b: end portion
14: block
14a: hollow part
14b: end face
15: plate member
15a: locking hole
21a, 31a: flat part
C: center axis
T: tensile force

### BEST MODE FOR CARRYING OUT THE INVENTION

An embodiment of the present invention is explained below with reference to the drawings.

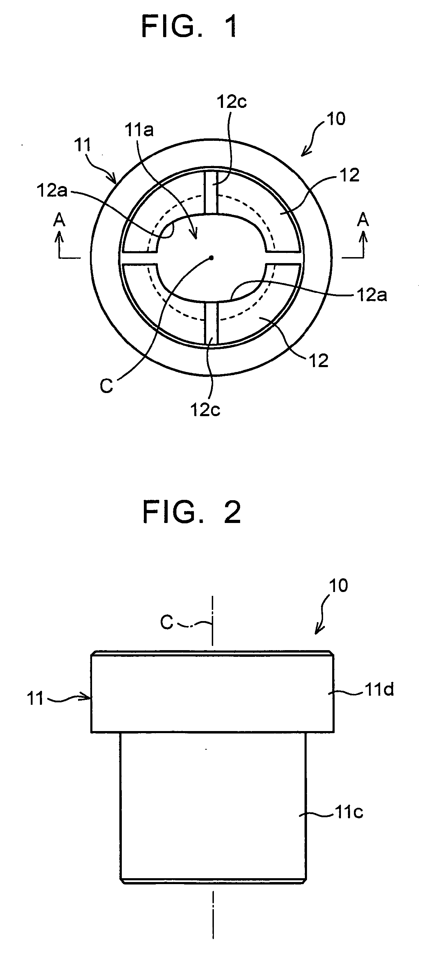

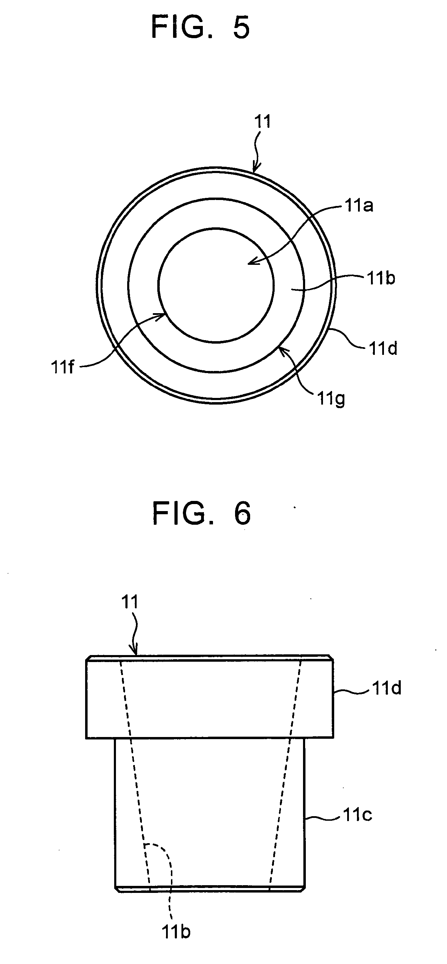

As shown in Figs. 1 to 10, a reinforcing bar locking device 10 of the present embodiment includes a body member 11 having a through hole 11 a in which a reinforcing bar 13 is inserted and a pair of fitting members 12 which is fitted between the reinforcing bar 13 inserted into the through hole 11 a and an inner peripheral surface of the through hole 11a. An inner peripheral surface 11b of the through hole 11a has a funnel shape whose diameter is reduced in a direction of a center axis. On an inner peripheral surface of the fitting member 12, a female screw thread part 12a is provided as an engaging section with the reinforcing bar 13. An outer peripheral surface 12b of the fitting member 12 is formed in a conical surface which has surface contact with the inner peripheral surface 11b of the body member 11. On an outer periphery of the body member 11, an inserting section 11c which has a substantially cylindrical shape and a flange section 11d which has a larger external diameter than the inserting section 11c are provided.

The two fitting members 12 are positioned to oppose each other so that an outer appearance of the fitting members 12 forms an inverted, substantially truncated conical shape, and are inserted into the through hole 11 a of the body member 11. Inside the through hole 11a, the female screw thread part 12a on the inner peripheral surface of the fitting members 12 is screwed onto a male screw part 13a formed on an outer peripheral surface of the reinforcing member 13, thereby clamping the reinforcing bar 13. In each of the fitting members 12, a slit 12c is formed in the direction along the center axis C of the through hole 11a. The slit 12c is opened from an upper end toward a lower end of the fitting member 12. A length of the slit 12c is approximately 65 to 75% of a length of the fitting member 12 in the direction of the center axis C but is not limited to this length.

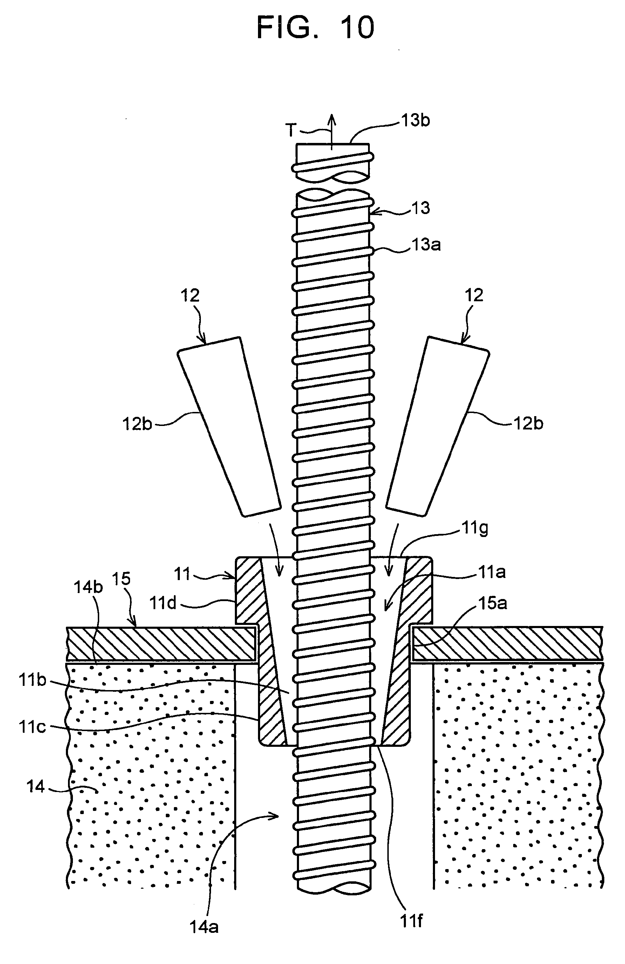

Next, referring to Fig. 10 to 12, a use of the reinforcing bar locking device 10 is explained below. Figs. 10 to 12 illustrate an example of construction where the reinforcing bar 13 is inserted into a hollow part 14a of stacked concrete blocks 14 and fixed while applying a tensile force to the reinforcing bar 13.

As shown in Fig. 10, on an end face 14b of the block 14 positioned uppermost, a plate member 15 having a function of a washer is placed. The plate member 15 has a locking hole 15a which has a smaller diameter than the hollow part 14a and allows the reinforcing bar 13 to pass therethrough. An end portion 13b of the reinforcing bar 13 inserted into the hollow part 14a projects from the locking hole 15a of the plate member 15. A lower end portion (not shown) of the reinforcing bar 13 is fixed to an end face of a block positioned lowermost (not shown). The body member 11 is mounted so that the end portion 13b of the reinforcing bar 13 passes through the through hole 11a of the body member 11 from a smaller opening 11f to a larger opening 11g. Then, the body member 11 is moved along the reinforcing bar 13 up to the plate member 15 on the end face 14b of the block 14, and the inserting section 11c of the body member 11 is inserted into the locking hole 15a of the plate member 15, resulting in the state where the flange section 11d protrudes from an upper face of the plate member 15.

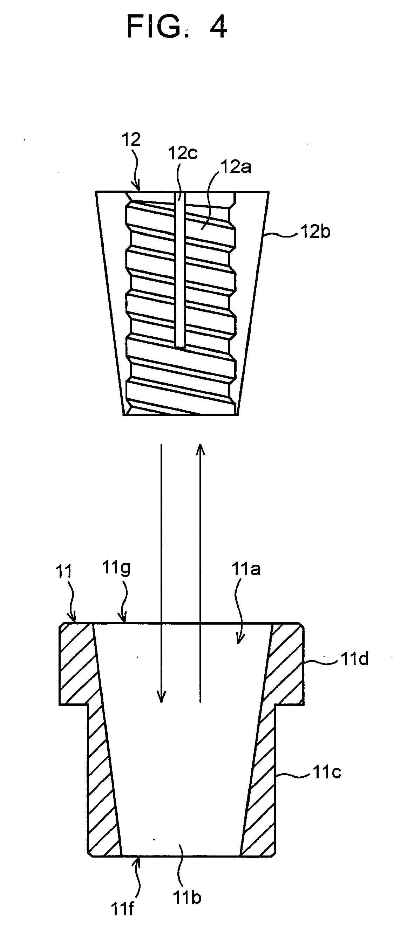

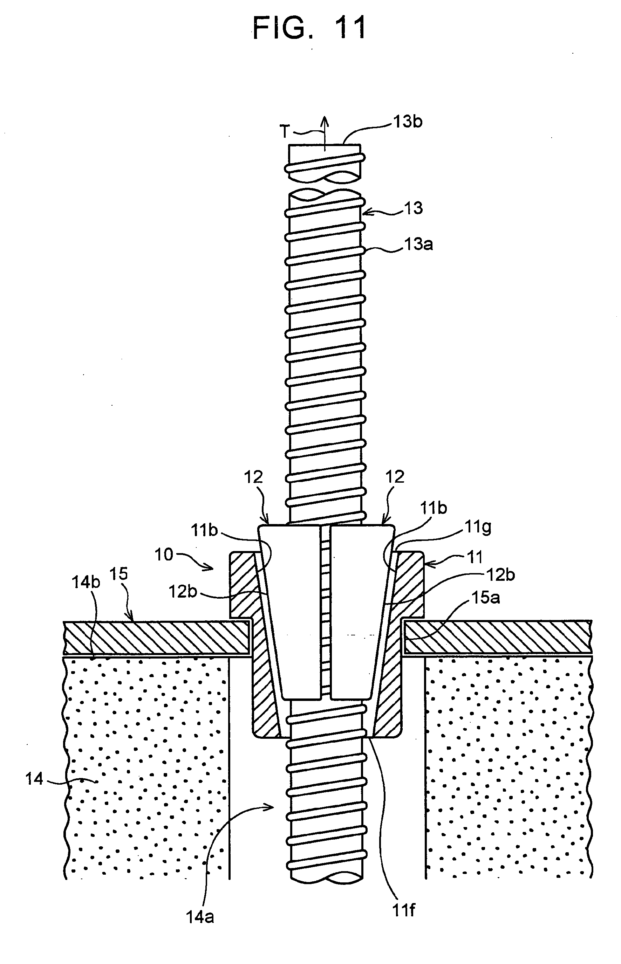

Next, a conventional hydraulic jack (not shown) is set on a side of the end portion 13b of the reinforcing bar 13 to apply a tensile force T to the reinforcing bar 13. Then, as shown in Fig. 11, the two fitting members 12 are fit between the reinforcing bar 13 and the inner peripheral surface 11b of the through hole 11a of the body member 11, and clamp the reinforcing bar 13. In this case, the female screw thread part 12a which is an engaging section of the fitting member 12 (see Fig. 4) is screwed onto the male screw part 13a on the outer peripheral surface of the reinforcing bar 13. Thus, as shown in Fig. 11, an upper end portion of the fitting member 12 in the reinforcing bar locking device 10 is rendered somewhat protruding from the larger opening 11g of the body member 11.

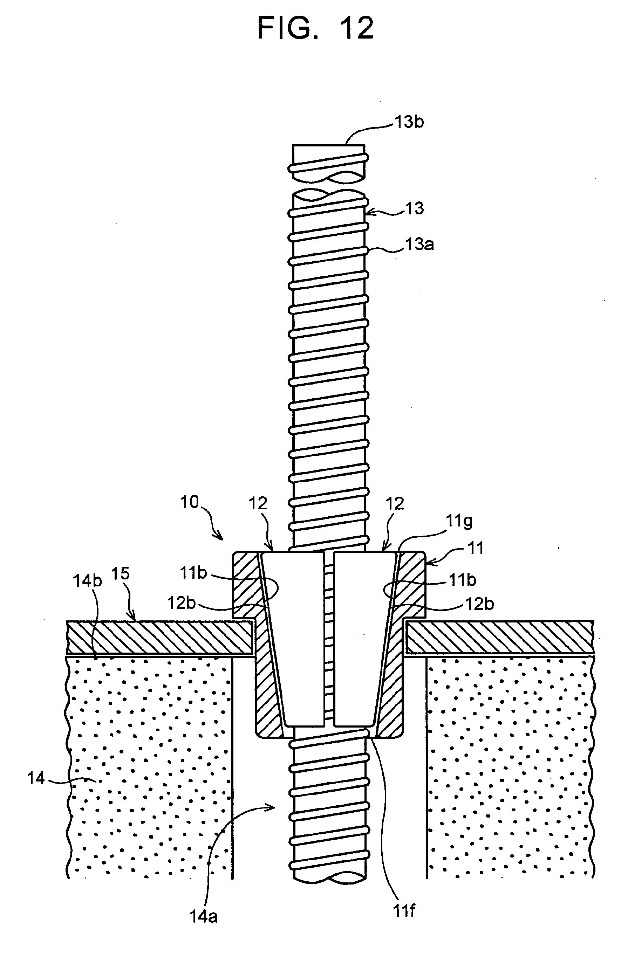

After that, the tensile force T applied to the reinforcing bar 13 is released. Then, as the reinforcing bar 13 contracts in its longitudinal direction, the plurality of fitting members 12 are pulled in a direction toward the reduced diameter of the through hole 11a of the body member 11 as shown in Fig. 12 while the plurality of fitting members 12 are maintained to engage with the reinforcing bar 13, and the outer peripheral surface 12b (conical surface) of the fitting members 12 is brought into surface contact with the inner peripheral surface 11b of the through hole 11a of the body member 11 and locked thereon. Accordingly, since the reinforcing bar locking device 10 is fixed on the end face 14b of the block 14 while being locked with the reinforcing bar 13, the reinforcing bar 13 is fixed while the tensile force is being applied to the reinforcing bar 13.

By using the reinforcing bar locking device 10, the body member 11 mounted from the end portion 13b of the reinforcing bar 13 can be moved up to the end face 14b of the block 14 without turning the body member 11 at all. Therefore, the body member 11 can be easily locked at a position relatively far from the end portion 13b of the reinforcing bar 13. Moreover, with the contracting force of the reinforcing bar 13 after releasing the tensile force T, the reinforcing bar 13, the fitting member 12, and the body member 11 are locked in an integrated manner, which exhibits a strong locking force applied to the reinforcing bar 13.

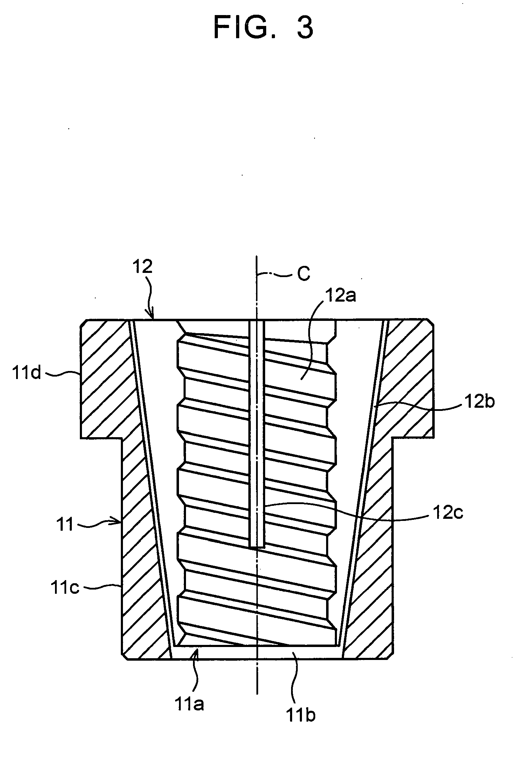

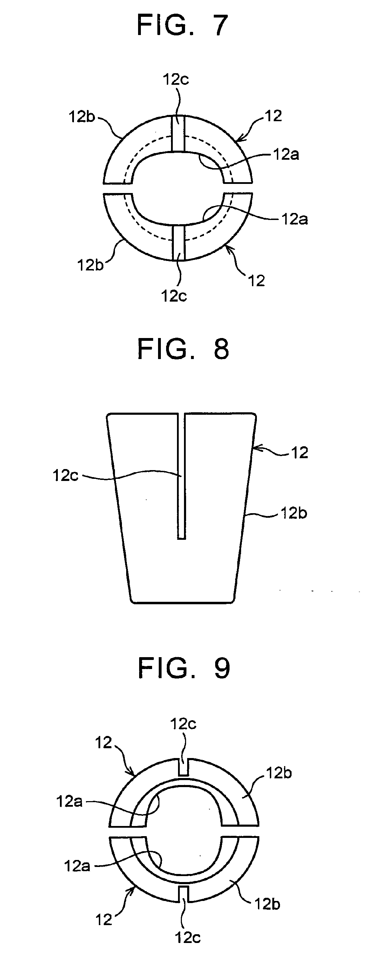

In addition, as shown in Figs. 3 and 4, the female screw thread part 12a which engages with the male screw part 13a formed on the outer peripheral surface of the reinforcing bar 13 is formed on the inner peripheral surface of the fitting member 12 as the engaging section. Therefore, the fitting member 12 and the reinforcing bar 13 can be firmly engaged with each other, applying a strong locking force to the reinforcing bar 13. Furthermore, as shown in Figs. 7 to 9 and other figures, the slit 12c is opened in each of the pair of fitting members 12. Thus, when the reinforcing bar 13 and the fitting members 12 move in the direction toward the reduced diameter of the through hole 11a of the body member 11 by the contracting force of the reinforcing bar 13 after the tensile force T is released, the fitting members 12 themselves are deformable so as to reduce their diameter due to a surface pressure applied by the inner peripheral surface 11b of the through hole 11a. Accordingly, a clamping action of the fitting members 12 exerted onto the reinforcing bar 13 is increased, thereby exhibiting an extremely strong locking force to the reinforcing bar 13.

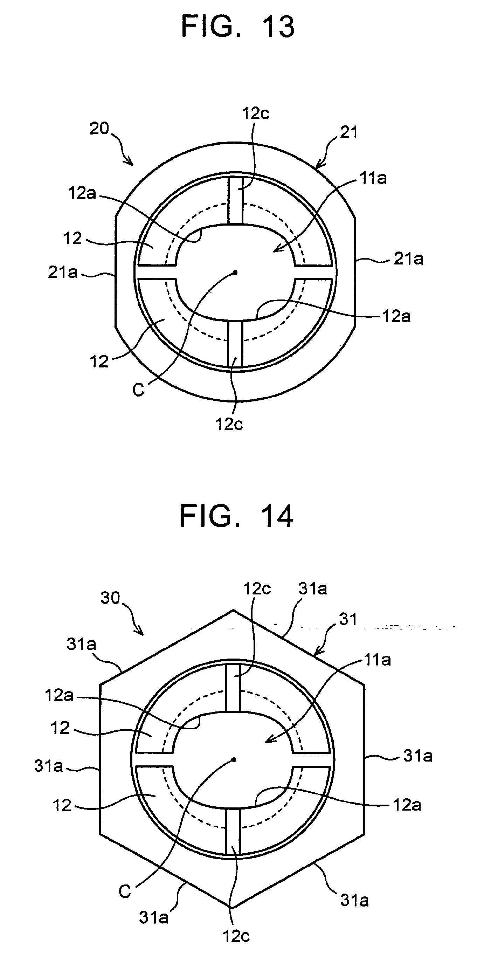

Next, with reference to Figs. 13 and 14, other embodiments of the present invention are explained below. In reinforcing bar locking devices 20 and 30 shown in Figs. 13 and 14, the members having the same functions and effects as those of the members of the above-described reinforcing bar locking device 10 bear the same reference numerals as in Figs. 1 to 12, and the explanation thereof is omitted.

The reinforcing bar locking device 20 shown in Fig. 13 has a pair of flat parts 21a formed on an outer periphery of a body member 21. The flat parts 21 a are arranged in parallel with each other on opposite sides of a center axis C of a through hole 11a. The reinforcing bar locking device 30 shown in Fig. 14 has three pairs of flat parts 31a formed on an outer periphery of a body member 31. Each pair of the flat parts 31a are arranged in parallel with each other on opposite sides of a center axis C of a through hole 11 a.

In the above structures, the body members 21 and 31 can be turned by engaging a tool such as a wrench (not shown) with the flat parts 21a and 31a of the body members 21 and 31. Therefore, it is possible to tighten or loosen the reinforcing bar locking devices 20 and 30 locked with the reinforcing bar 13 as shown in Fig. 12 using a wrench or the like according to need. The advantages and effects of other members are the same as those of the reinforcing bar locking device 10 described above.

### INDUSTRIAL APPLICABILITY

The reinforcing bar locking device of the present invention is widely applicable in the construction industry or the like where various kinds of structures are constructed by fixing a reinforcing bar inserted into a plurality of arrayed blocks while applying a tensile force to the reinforcing bar.

## Claims

1. A reinforcing bar locking device comprising:
a body member having a through hole in which a reinforcing bar is insertable;
a plurality of fitting members which are fitted between the reinforcing bar inserted into the through hole and an inner peripheral surface of the through hole, the inner peripheral surface of the through hole having a funnel shape whose diameter is reduced in a direction of a center axis;
an engaging section which engages with the reinforcing bar formed on an inner peripheral surface of the fitting members; and
a conical surface which has surface contact with the inner peripheral surface of the body member formed on at least a part of an outer peripheral surface of the fitting members.

2. The reinforcing bar locking device according to claim 1, wherein the engaging section is a female screw thread part provided on the inner peripheral surface of the fitting members, the female screw thread part being screwed onto a male screw part formed on an outer peripheral surface of the reinforcing bar.

3. The reinforcing bar locking device according to claim 1, wherein the fitting members have a slit opened in the direction of the center axis of the through hole.

4. The reinforcing bar locking device according to claim 1, wherein the body member has at least a pair of flat parts arranged in parallel with each other on opposite sides of the center axis of the through hole on an outer periphery of the body member.
